(19) Europäisches Patentamt
European Patent Office
Office européen des brevets

(11) EP 4 056 623 A1

(12) # EUROPEAN PATENT APPLICATION
published in accordance with Art. 153(4) EPC

(43) Date of publication:
**14.09.2022 Bulletin 2022/37**

(21) Application number: **20885134.5**

(22) Date of filing: **04.11.2020**

(51) International Patent Classification (IPC):
***C08G 64/04*** *(2006.01)* ***C08K 7/14*** *(2006.01)*
***C08L 69/00*** *(2006.01)* ***C08K 3/013*** *(2018.01)*
***C08K 3/34*** *(2006.01)* ***C08K 3/38*** *(2006.01)*

(52) Cooperative Patent Classification (CPC):
**C08G 64/04; C08K 3/013; C08K 3/34; C08K 3/38; C08K 7/14; C08L 69/00**

(86) International application number:
**PCT/JP2020/041157**

(87) International publication number:
**WO 2021/090823 (14.05.2021 Gazette 2021/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.11.2019 JP 2019201275**

(71) Applicant: **Mitsubishi Engineering-Plastics Corporation**
**Tokyo 105-0021 (JP)**

(72) Inventors:
- **KIKUCHI Tatsuya**
**Hiratsuka-shi, Kanagawa 254-0016 (JP)**
- **NISHINO Yohei**
**Hiratsuka-shi, Kanagawa 254-0016 (JP)**

(74) Representative: **Ter Meer Steinmeister & Partner Patentanwälte mbB**
**Nymphenburger Straße 4**
**80335 München (DE)**

(54) **RESIN COMPOSITION AND ELECTRONIC/ELECTRICAL DEVICE COMPONENT**

(57) Provided is a resin composition for electronic/electric equipment component used with an electromagnetic wave at a frequency of 1 GHz or higher, having low loss tangent, and, an electronic/electric equipment component used with an electromagnetic wave at a frequency of 1 GHz or higher. The resin composition for electronic/electric equipment component used with an electromagnetic wave at a frequency of 1 GHz or higher contains a polycarbonate resin, and the polycarbonate resin having a mass ratio of a structural unit represented by formula (1) and a carbonate unit other than the structural unit represented by formula (1) of (33 to 100):(67 to 0), in formula (1), each of $R^1$ and $R^2$ independently represents a hydrogen atom or a methyl group, and $W^1$ represents a single bond or a divalent group.

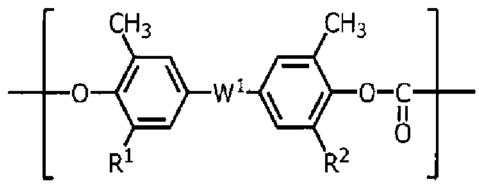
(1)

EP 4 056 623 A1

## Description

### TECHNICAL FIELD

This invention relates to a resin composition for electronic/electric equipment component used with an electromagnetic wave at a frequency of 1 GHz or higher, and an electronic/electric equipment component used with an electromagnetic wave at a frequency of 1 GHz or higher.

### BACKGROUND ART

Polycarbonate resin has been widely used in many fields, for its excellence in heat resistance, impact resistance and transparency. Among others, polycarbonate resin composition reinforced with an inorganic filler such as glass fiber has been widely applied in industrial fields of camera, OA equipment and electric/electronic components, for its various excellent performances including dimensional stability, mechanical strength, heat resistance and electric characteristic.

On the other hand, recent sharp increase in communication information traffic has raised demand for a material having small loss tangent in the gigahertz band. For example, Patent Literature 1 describes a resin composition for electronic component for use in the gigahertz band, which includes at least one resin selected from the group consisting of thermoplastic resin, curable resin, and a composite resin of thermoplastic resin and curable resin, and, nano-scale carbon tube, wherein the content ratio of the nano-scale carbon tube is 0.0001 to 0.4% by mass relative to the resin.

### CITATION LIST

### PATENT LITERATURE

[Patent Literature 1] WO2005/075571

### SUMMARY OF THE INVENTION

### TECHNICAL PROBLEM

As described previously, the resin composition has been examined in pursuit of low loss tangent. Diversified applications of the resin composition have, however, raised a need for a novel material having low loss tangent.

This invention is aimed at solving such problem, and an object of which is to provide a resin composition for electronic/electric equipment component used with an electromagnetic wave at a frequency of 1 GHz or higher, having low loss tangent, and, an electronic/electric equipment component used with an electromagnetic wave at a frequency of 1 GHz or higher.

### SOLUTION TO PROBLEM

The present inventors conducted research to address the above-mentioned problems, and as a result, discovered that the resin composition having low loss tangent could be obtained by using polycarbonate resin containing a certain carbonate unit. Specifically, the problems described above are solved by the following means.

<1> A resin composition for electronic/electric equipment component used with an electromagnetic wave at a frequency of 1 GHz or higher, the resin composition comprising a polycarbonate resin, and the polycarbonate resin having a mass ratio of a structural unit represented by formula (1) and a carbonate unit other than the structural unit represented by formula (1) of (33 to 100):(67 to 0),

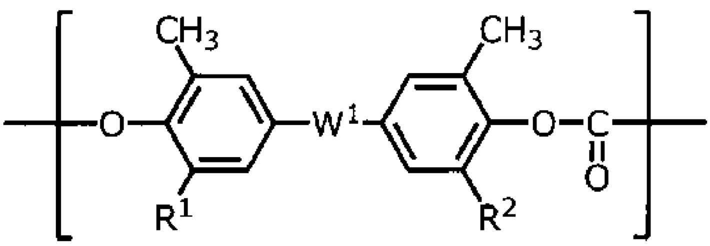 (1)

(in formula (1), each of $R^1$ and $R^2$ independently represents a hydrogen atom or a methyl group, and $W^1$ represents

a single bond or a divalent group).

<2> The resin composition of <1>, further comprising 10 parts by mass or more and 100 parts by mass or less of an inorganic filler, per 100 parts by mass of the polycarbonate resin.

<3> The resin composition of <2>, wherein a mass ratio of the structural unit represented by formula (1) in the polycarbonate resin, per 100 parts by mass of the inorganic filler, is 150 parts by mass or larger.

<4> The resin composition of <2> or <3>, wherein the inorganic filler contains at least one selected from the group consisting of glass fiber, talc, and boron nitride.

<5> The resin composition of any one of <2> to <4>, wherein the inorganic filler contains glass fiber.

<6> The resin composition of any one of <1> to <5>, wherein the carbonate unit other than the structural unit represented by formula (1) contains a structural unit represented by formula (5),

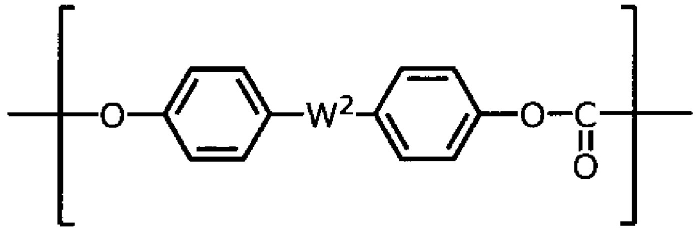
(5)

(in formula (5), $W^2$ represents a single bond or a divalent group).

<7> The resin composition of <6>, comprising:

a polycarbonate resin (A1) in which the structural unit represented by formula (1) accounts for 90% by mass or more of all structural units; and

a polycarbonate resin (A2) in which the structural unit represented by formula (5) accounts for 90% by mass or more of all structural unit,

and, the polycarbonate resin (A1) accounts for 45% by mass or more of the polycarbonate resin contained in the resin composition.

<8> The resin composition of <7>, wherein the polycarbonate resin (A1) has a viscosity-average molecular weight of 16,000 or larger and 30,000 or smaller, and the polycarbonate resin (A2) has a viscosity-average molecular weight of 16,000 or larger and 35,000 or smaller.

<9> The resin composition of <6>, wherein the polycarbonate resin contains a polycarbonate resin (A3) in which the structural unit represented by formula (1) accounts for 30 to 70% by mass of all structural units, and the structural unit represented by formula (5) accounts for 70 to 30% by mass of all structural units, and, the polycarbonate resin (A3) accounts for 50% by mass or more of the polycarbonate resin contained in the resin composition.

<10> The resin composition of any one of <1> to <9>, wherein a pencil hardness is "H" or larger, when formed into a flat plate and measured in compliance with JIS K5600.

<11> The resin composition of any one of <1> to <10>, wherein a loss tangent is 0.0053 or smaller, when formed into a flat plate and measured at a frequency of 2.45 GHz.

<12> The resin composition of any one of <1> to <11>, further comprising 0.001 parts by mass or more and 30 parts by mass or less of a flame retardant, per 100 parts by mass of the polycarbonate resin.

<13> An electronic/electric equipment component formed of the resin composition described in any one of <1> to <12>, used with an electromagnetic wave at a frequency of 1 GHz or higher.

<14> The electronic/electric equipment component of <13>, wherein at least a part of the electronic/electric equipment component allows an electromagnetic wave at a frequency of 1 GHz or higher to transmit therethrough.

<A> The resin composition according to any one of the aforementioned resin compositions, wherein $W^1$ in formula is represented by formula (2a) or formula (2i) described later.

<B> The resin composition according to any one of the aforementioned resin compositions, wherein the structural unit represented by formula (1) is represented by formula (3) or formula (4-2) described later.

<C> The resin composition according to any one of the aforementioned resin compositions, wherein the carbonate unit other than the structural unit represented by formula (1) is a structural unit represented by formula (5) described later, and $W^2$ is represented by formula (2a) described later.

<D> The resin composition according to any one of the aforementioned resin compositions, wherein the total content

of the polycarbonate resin (A1) and the polycarbonate resin (A2) accounts for 90% by mass or more of the polycarbonate resin contained in the resin composition.

<E> The resin composition according to any one of the aforementioned resin compositions, containing no inorganic filler, and containing 80% by mass or more of the polycarbonate resin, in the resin composition.

<F> The resin composition according to any one of the aforementioned resin compositions, containing an inorganic filler, and containing 80% by mass or more, in total, of the polycarbonate resin and the inorganic filler, in the resin composition.

<G> The resin composition according to any one of the aforementioned resin compositions, containing an inorganic filler, and the inorganic filler containing a fiber-like or plate-like material.

<H> The resin composition according to any one of the aforementioned resin compositions, containing 0.001% by mass or more and 1% by mass or less of a heat stabilizer (preferably phosphorus-containing stabilizer, and more preferably tris(2,4-di-*tert*-butylphenyl)phosphite), per 100 parts by mass of the polycarbonate resin.

<I> The resin composition according to any one of the aforementioned resin compositions, containing 0.001% by mass or more and 1% by mass or less of an antioxidant (preferably hindered phenol-based antioxidant, and more preferably octadecyl-3-(3,5-di-tert-butyl-4-hydroxyphenyl) propionate), per 100 parts by mass of the polycarbonate resin.

<J> The resin composition according to any one of the aforementioned resin compositions, containing 0.001% by mass or more and 2% by mass or less of a mold releasing agent (preferably ester formed between aliphatic acid and alcohol, and more preferably pentaerythritol tetrastearate), per 100 parts by mass of the polycarbonate resin.

<K> The resin composition according to any one of the aforementioned resin compositions, containing 98% by mass or more (more preferably 100% by mass), in total, of the polycarbonate resin, the inorganic filler, as well as optionally added heat stabilizer, antioxidant and mold releasing agent.

<L> The resin composition according to any one of the aforementioned resin compositions, containing 98% by mass or more (more preferably 100% by mass), in total, of the polycarbonate resin, the inorganic filler, as well as optionally added heat stabilizer, antioxidant, mold releasing agent and flame retardant.

ADVANTAGEOUS EFFECTS OF INVENTION

This invention enabled provision of a resin composition for electronic/electric equipment component used with an electromagnetic wave at a frequency of 1 GHz or higher, having low loss tangent, and, an electronic/electric equipment component used with an electromagnetic wave at a frequency of 1 GHz or higher.

DESCRIPTION OF EMBODIMENTS

This invention will be detailed below. Note that all numerical ranges given in this patent specification, using "to" preceded and succeeded by numerals, are used to represent the ranges including these numerals respectively as the lower and upper limit values.

In this patent specification, various physical values and characteristic values are those demonstrated at 23°C unless otherwise specifically noted.

"Part(s) by mass" in this specification denotes relative quantity of each ingredient, meanwhile "% by mass" denotes absolute quantity of each ingredient.

The resin composition for electronic/electric equipment component of this invention, used with an electromagnetic wave at a frequency of 1 GHz or higher (may be simply referred to as "the resin composition of this invention", hereinafter), is featured by containing a polycarbonate resin, and the polycarbonate resin having a mass ratio of a structural unit represented by formula (1) and a carbonate unit other than the structural unit represented by formula (1) of (33 to 100):(67 to 0).

With such design, low loss tangent may be achieved.

Moreover, the obtainable electronic/electric equipment component will have an improved scratch resistance. In particular, low loss tangent and high scratch resistance may be properly balanced. The scratch resistance in this context typically means a property of the surface of the electronic/electric equipment component less likely to get scratched.

This is supposedly due to a predetermined ratio or more of the structural unit represented by formula (1), such as bisphenol C-derived structural unit, contained in the polycarbonate resin.

<Polycarbonate Resin>

The resin composition of this invention contains a polycarbonate resin. The polycarbonate resin used in this invention contains the structural unit represented by formula (1) and the carbonate unit other than the structural unit

represented by formula (1) (may be referred to as "other carbonate unit", hereinafter), wherein the mass ratio of the structural unit represented by formula (1) and the carbonate unit other than the structural unit represented by formula (1) is (33 to 100):(67 to 0).

The mass ratio of the structural unit represented by formula (1) and the carbonate unit other than the structural unit represented by formula (1) is (33 to 100):(67 to 0), preferably (35 to 100):(65 to 0), more preferably (37 to 100):(63 to 0), even more preferably (40 to 100):(60 to 0), yet more preferably (45 to 100):(55 to 0), may also be (47 to 100):(53 to 0), may again also be (60 to 100):(40 to 0), and may once again be (75 to 100):(25 to 0). Within these ranges, further low loss tangent is attainable.

The polycarbonate resin may contain the structural unit represented by formula (1) and the carbonate unit other than the structural unit represented by formula (1) one by one, or two by two or more. In a case where two or more kinds are contained, the total content preferably falls within any of the aforementioned ranges.

The polycarbonate resin used in this invention is usually composed of the structural unit represented by formula (1), the carbonate unit other than the structural unit represented by formula (1), and terminal groups. Such other carbonate unit may have a branched structure.

Contents of the structural unit represented by formula (1) and the other carbonate unit in this invention are given by ratios relative to all structural units (100% by mass) but excluding both terminal groups.

Next, the structural unit represented by formula (1) will be explained. The structural unit represented by formula (1) is as follows:

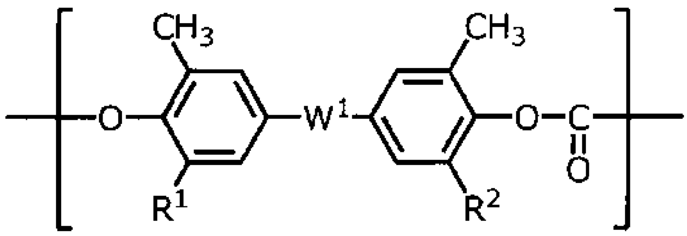

(1)

(in formula (1), each of $R^1$ and $R^2$ independently represents a hydrogen atom or a methyl group, and $W^1$ represents a single bond or a divalent group).

In formula (1), each of $R^1$ and $R^2$ represents a hydrogen atom or a methyl group. With each of $R^1$ and $R^2$ representing a hydrogen atom, the electronic/electric equipment component of this invention will tend to have a further improved wetherability. With each of $R^1$ and $R^2$ representing a methyl group, the electronic/electric equipment component of this invention will tend to have further improved heat resistance and moist heat stability. Hence, $R^1$ and $R^2$ are properly selectable depending on needs, wherein hydrogen atom is preferred.

In formula (1), $W^1$ represents a single bond or a divalent group. The divalent group is exemplified by oxygen atom, sulfur atom, divalent organic group, and combinations of them. The divalent organic group is preferred.

The divalent organic group is properly selectable from those previously known without special limitation, and is exemplified by the organic groups represented by formulae (2a) to (2h) below.

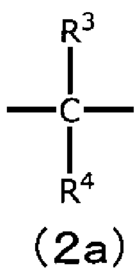

(2a)

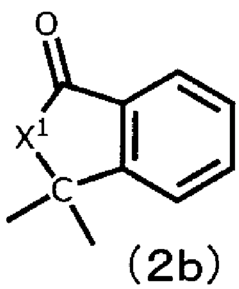

(2b)

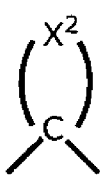

(2c)

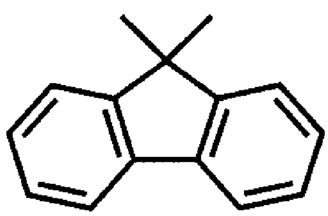

(2d)

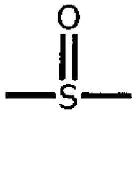
(2e)

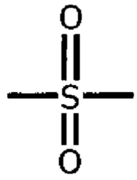
(2f)

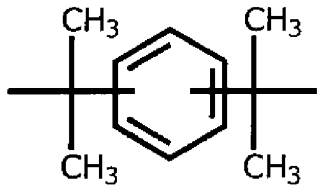
(2g)

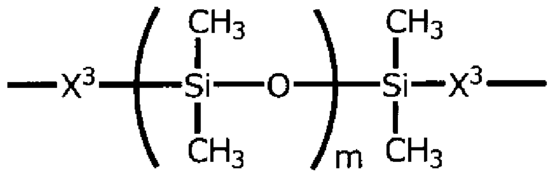
(2h)

In formula (2a), each of $R^3$ and $R^4$ independently represents a hydrogen atom, a monovalent hydrocarbon group having 1 to 24 carbon atoms, or an alkoxy group having 1 to 24 carbon atoms, among which the monovalent hydrocarbon group having 1 to 24 carbon atoms is preferred.

The monovalent hydrocarbon group having 1 to 24 carbon atoms is exemplified by alkyl group having 1 to 24 carbon atoms, alkenyl group having 2 to 24 carbon atoms, optionally substituted aryl group having 6 to 24 carbon atoms, and arylalkyl group having 7 to 24 carbon atoms, wherein the alkyl group having 1 to 24 carbon atoms is preferred.

The alkyl group having 1 to 24 carbon atoms is exemplified by straight-chain or branched alkyl group, and alkyl group partially having a cyclic structure, among which the straight-chain alkyl group is preferred. The alkyl group having 1 to 24 carbon atoms is exemplified by methyl group, ethyl group, n-propyl group, n-butyl group, n-pentyl group, n-hexyl group, n-heptyl group, and n-octyl group, among which ethyl group is preferred.

The alkenyl group having 2 to 24 carbon atoms is exemplified by straight-chain or branched alkyl group, and alkenyl group partially having a cyclic structure, among which the straight-chain alkenyl group is preferred. The straight-chain alkenyl group having 2 to 24 carbon atoms is exemplified by vinyl group, n-propenyl group, n-butenyl group, n-pentenyl group, n-hexenyl group, n-heptenyl group, and n-octenyl group, among which vinyl group is preferred.

The aryl group having 6 to 24 carbon atoms is exemplified by those which may optionally be substituted by alkyl group or the like, such as phenyl group, naphthyl group, methylphenyl group, dimethylphenyl group, and trimethylphenyl group. The arylalkyl group having 7 to 24 carbon atoms is exemplified by benzyl group.

The alkoxy group having 1 to 24 carbon atoms is exemplified by straight-chain or branched alkoxy group, and alkoxy group partially having a cyclic structure, among which the straight-chain alkoxy group is preferred. The straight-chain alkoxy group is exemplified by methoxy group, ethoxy group, propoxy group, and butoxy group.

In formula (2b), $X^1$ represents an oxygen atom or $NR^a$. Now, $R^a$ is synonymous to the aforementioned $R^3$ and $R^4$.

In formula (2c), $X^2$ represents a divalent hydrocarbon group having 3 to 18 carbon atoms, and is typically exemplified by propylene group, butylene group, pentylene group, hexylene group, heptylene group, octylene group, nonylene group, decylene group, undecylene group, and dodecynylene group, each of them may further have a substituent. The substituent is exemplified by methyl group, ethyl group, propyl group, butyl group, pentyl group, and phenyl group. $X^2$ may have a crosslinked structure.

Formula (2c) is preferably given by formula (2i).

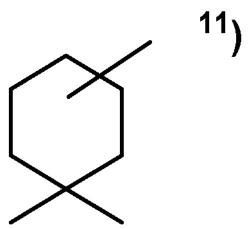

In formula (2i), each $R^{11}$ independently represents a monovalent hydrocarbon group having 1 to 24 carbon atoms, or an alkoxy group having 1 to 24 carbon atoms. Details for the monovalent hydrocarbon group having 1 to 24 carbon atoms and the alkoxy group having 1 to 24 carbon atoms are same as that of $R^3$ in formula (2a).

q Represents an integer of 0 to 3, and is preferably 0.
* Represents a bonding site to which other group is bound.

In formula (2h), $X^3$ represents an alkylene group having 1 to 7 carbon atoms. The alkylene group may have a straight chain, branched chain, or cyclic structure, and is exemplified by methylene group, ethylene group, propylene group, and butylene group.

m Represents an integer of 1 to 500, which is preferably 5 to 300, and is more preferably 10 to 100.

A raw monomer of the structural unit represented by formula (1) is exemplified by those derived from aromatic dihydroxy compounds such as bis(4-hydroxy-3-methylphenyl)methane, bis(4-hydroxy-3,5-dimethylphenyl)methane, 1,1-bis(4-hydroxy-3-methylphenyl)ethane, 1,1-bis(4-hydroxy-3,5-dimethylphenyl)ethane, 2,2-bis(4-hydroxy-3-methylphenyl)propane, 2,2-bis(4-hydroxy-3,5-dimethylphenyl)propane, 2,2-bis(4-hydroxy-3-isopropylphenyl)propane, 2,2-bis(4-hydroxy-3-methylphenyl)butane, 2,2-bis(4-hydroxy-3,5-dimethylphenyl)butane, 1,3-bis(2-(4-hydroxy-3-methylphenyl)-2-propyl)benzene, 1,4-bis(2-(4-hydroxy-3-methylphenyl)-2-propyl)benzene, 1,1-bis(4-hydroxy-3-methylphenyl)cyclohexane, 1,1-bis(4-hydroxy-3,5-dimethylphenyl)cyclohexane, 1,1-bis(4-hydroxy-3-methylphenyl)-3,3,5-trimethylcyclohexane, 1,1-bis(4-hydroxy-3,5-dimethylphenyl)-3,3,5-trimethylcyclohexane, bis(4-hydroxy-3-methylphenyl)diphenylmethane, 9,9-bis(4-hydroxy-3-methylphenyl)fluorene, 9,9-bis(4-hydroxy-3,5-dimethylphenyl)fluorene, bis(4-hydroxy-3-methylphenyl)sulfone, 3,3-bis(4-hydroxy-3-methylphenyl)phthalide, 2-methyl-3,3'-bis(4-hydroxy-3-methylphenyl)phthalimidine, 2-phenyl-3,3'-bis(4-hydroxy-3-methylphenyl)phthalimidine, 4,4'-dihydroxy-3,3'-dimethylbiphenyl, and 4,4'-dihydroxy-3,3',5,5'-tetramethylbiphenyl.

The aromatic dihydroxy compound is more preferably 2,2-bis(4-hydroxy-3-methylphenyl)propane, 2,2-bis(4-hydroxy-3,5-dimethylphenyl)propane, 1,1-bis(4-hydroxy-3-methylphenyl)cyclohexane, or 1,1-bis(4-hydroxy-3-methylphenyl)-3,3,5-trimethylcyclohexane; more preferably 2,2-bis(4-hydroxy-3-methylphenyl)propane, or 2,2-bis(4-hydroxy-3,5-dimethylphenyl)propane; and even more preferably 2,2-bis(4-hydroxy-3-methylphenyl)propane.

That is, the structural unit represented by formula (1) is more preferably the structural units represented by formula (3), formula (4) and formula (4-2) below, and even more preferably the structural unit represented by formula (3) or formula (4-2). With these structural unit contained therein, effects of this invention will be more efficiently demonstrated.

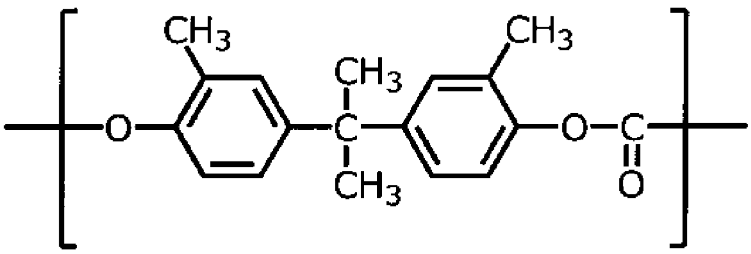

(3)

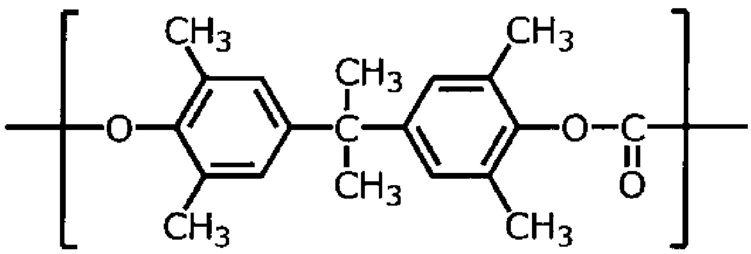

(4)

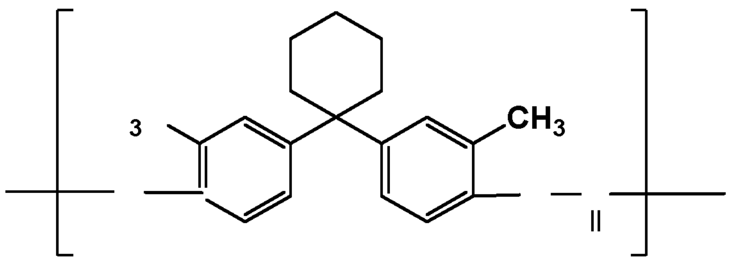

Next, the carbonate unit other than the structural unit represented by formula (1) will be explained.

Type of such other carbonate unit contained in the polycarbonate resin in this invention is not specifically limited, to which known carbonate units are widely applicable.

Such other carbonate unit is specifically exemplified by the structural units represented by formula (5) and formula (6) below, among them the structural unit represented by formula (5) is preferred. In particular, the structural unit represented by formula (5) preferably accounts for 90% by mass or more (preferably 95% by mass or more, and more preferably 99% by mass or more) of such other carbonate unit.

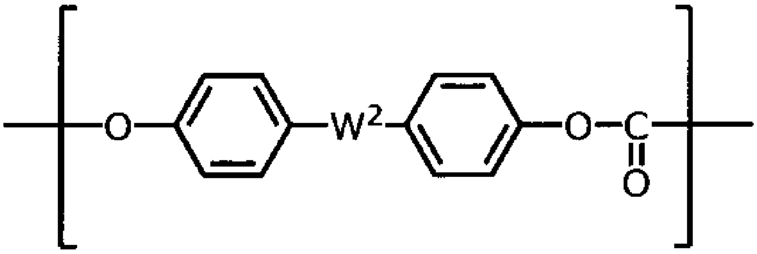

(5)

(In formula (5), $W^2$ represents a single bond or divalent group.)

In formula (5), $W^2$ is synonymous to the aforementioned $W^1$, with equivalent preferred ranges. In particular, formula (2a) is preferred.

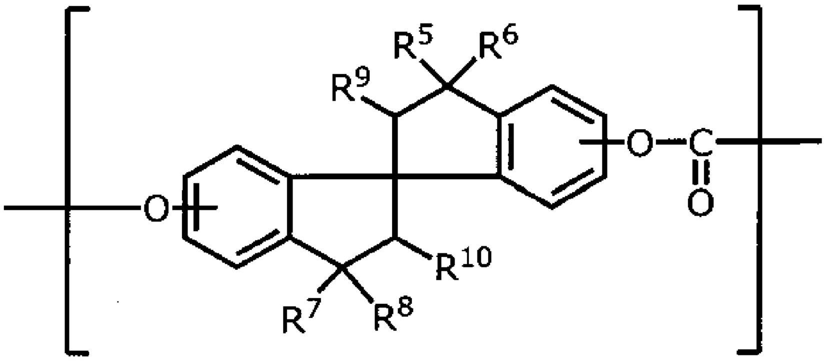

(6)

In formula (6), each of $R^5$, $R^6$, $R^7$, $R^8$, $R^9$ and $R^{10}$ independently represents at least one selected from hydrogen atom, and alkyl group having 1 to 6 carbon atoms. The alkyl group having 1 to 6 carbon atoms is exemplified by methyl group, ethyl group, and propyl group. In formula (6), each of $R^5$, $R^6$, $R^7$, and $R^8$ preferably represents an alkyl group having 1 to 6 carbon atoms, and more preferably represents a methyl group. Each of $R^9$ and $R^{10}$ preferably represents a hydrogen atom.

Such other carbonate unit is specifically exemplified by structural units derived from 2,2-bis(4-hydroxyphenyl)propane (bisphenol A), 2,2-bis(4-hydroxyphenyl)cyclohexane, 2,2-bis(4-hydroxyphenyl)-3,3,5-trimethylcyclohexane, and 6,6'-dihydroxy-3,3,3',3'-tetramethyl-1,1'-spiroindane. Among them, 2,2-bis(4-hydroxyphenyl)propane (bisphenol A), and 6,6'-dihydroxy-3,3,3',3'-tetramethyl-1,1'-spiroindane are more preferred; and 2,2-bis(4-hydroxyphenyl)propane (bisphenol A) is even more preferred.

Next, specific examples of the polycarbonate resin in this invention will be explained. In this invention, the polycarbonate resins below are preferred:

(1) blend of polycarbonate resin (A1) and polycarbonate resin (A2) ;
(2) polycarbonate resin (A3);
(3) blend of polycarbonate resin (A1) and polycarbonate resin (A3) ;
(4) blend of polycarbonate resin (A2) and polycarbonate resin (A3) ;
(5) blend of polycarbonate resin (A1) and polycarbonate resin (A2) and polycarbonate resin (A3); and
(6) blend that contains more than 0% by mass up to 5% by mass or less of a polycarbonate resin other than the polycarbonate resin (A1) to polycarbonate resin (A3), in the aforementioned (1) to (5).

Now, the aforementioned polycarbonate resin (A1) to polycarbonate resin (A3) are as follows.

Polycarbonate resin (A1):
polycarbonate resin in which the structural unit represented by formula (1) accounts for 90% by mass or more (preferably 95% by mass or more, and more preferably 99% by mass or more) of all structural units
Polycarbonate resin (A2):
polycarbonate resin in which the structural unit represented by formula (5) accounts for 90% by mass or more (preferably 95% by mass or more, and more preferably 99% by mass or more) of all structural units
Polycarbonate resin (A3):
polycarbonate resin in which the structural unit represented by formula (1) accounts for 30 to 70% by mass of all

structural units, and the structural unit represented by formula (5) accounts for 70 to 30% by mass all structural unit

A first embodiment of the polycarbonate resin in this invention contains the polycarbonate resin (A1) and the polycarbonate resin (A2), in which the polycarbonate resin (A1) accounts for 45% by mass or larger of the polycarbonate resin contained in the resin composition.

In the first embodiment, the percentage of the polycarbonate resin (A1) in the polycarbonate resin contained in the resin composition is preferably 48% by mass or larger, more preferably 50% by mass or larger, even more preferably more than 50% by mass, yet more preferably 55% by mass or larger, and furthermore preferably 60% by mass or larger. With the percentage controlled to any of these lower limit values or above, both of lowness of loss tangent and proper scratch resistance tend to improve.

In the first embodiment, the percentage of the polycarbonate resin (A1) in the polycarbonate resin contained in the resin composition is preferably 100% by mass or smaller. With the percentage controlled to such upper limit value or below, the heat resistance tends to further improve.

In the first embodiment, the total content of the polycarbonate resin (A1) and the polycarbonate resin (A2) preferably accounts for 90% by mass or more of the polycarbonate resin contained in the resin composition, more preferably accounts for 95% by mass or more, even more preferably accounts for 99% by mass or more, and may even be 100% by mass.

A second embodiment of the polycarbonate resin in this invention relates to a polycarbonate resin that contains the polycarbonate resin (A3) in which the structural unit represented by formula (1) accounts for 30 to 70% by mass of the all structural unit, and the structural unit represented by formula (5) accounts for 70 to 30% by mass of all structural units, and the polycarbonate resin (A3) accounts for 50% by mass or more of the polycarbonate resin contained in the resin composition, wherein the percentage is preferably 60% by mass or more, more preferably 70% by mass or more, even more preferably 80% by mass or more, yet more preferably 90% by mass or more, furthermore preferably 95% by mass or more, and again further more preferably 99% by mass or more.

In the second embodiment, the percentage of the structural unit represented by formula (1) in the polycarbonate resin (A3) is preferably 30% by mass or larger, more preferably 33% by mass or larger, even more preferably 35% by mass or larger, yet more preferably 37% by mass or larger, and furthermore preferably 40% by mass or larger. With the content controlled to any of these lower limit values, both of lowness of loss tangent and proper scratch resistance tend to improve. Meanwhile, the percentage of the structural unit represented by formula (1) in the polycarbonate resin (A3) is preferably 99% by mass or smaller, more preferably 95% by mass or smaller, even more preferably 90% by mass or smaller, yet more preferably 80% by mass or smaller, and furthermore preferably 70% by mass or smaller. With the percentage controlled to any of these upper limit values or below, the heat resistance tends to further improve.

In the second embodiment, the percentage of the structural unit represented by formula (5) in polycarbonate resin (A3) is preferably 30% by mass or larger, more preferably 33% by mass or larger, even more preferably 35% by mass or larger, yet more preferably 37% by mass or larger, furthermore preferably 40% by mass or larger, and may even be more than 50% by mass. With the percentage controlled to any of these lower limit values or above, both of lowness of loss tangent and proper scratch resistance ten to improve. Meanwhile, the percentage of the structural unit represented by formula (5) in the polycarbonate resin (A3) is preferably 99% by mass or smaller, more preferably 95% by mass or smaller, even more preferably 90% by mass or smaller, yet more preferably 80% by mass or smaller, and furthermore preferably 70% by mass or smaller. With the percentage controlled to any of these upper limit values or below, the heat resistance tends to further improve.

The polycarbonate resin contained in the resin composition of this invention may have viscosity-average molecular weight (for mixture, viscosity-average molecular weight of the mixture) which may properly be selectable without special limitation so long as the purpose of this invention will not be undermined. The viscosity-average molecular weight (Mv) converted from solution viscosity usually ranges from 10,000 to 50,000. The viscosity-average molecular weight (Mv) of the polycarbonate resin is preferably 11,000 or larger, more preferably 12,000 or larger, even more preferably 13,000 or larger, and particularly preferably 14,000 or larger. The viscosity-average molecular weight (Mv) of the polycarbonate resin is preferably 40,000 or smaller, more preferably 35,000 or smaller, even more preferably 30,000 or smaller, and particularly preferably 28,000 or smaller.

In this invention, the viscosity-average molecular weight of the polycarbonate resin (A1) is preferably 16,000 or larger and 30,000 or smaller. The viscosity-average molecular weight of the polycarbonate resin (A1) is preferably 17,000 or larger, meanwhile preferably 28,000 or smaller, and more preferably 26,000 or smaller.

In this invention, the viscosity-average molecular weight of the polycarbonate resin (A2) is preferably 16,000 or larger and 35,000 or smaller. The viscosity-average molecular weight of the polycarbonate resin (A2) is preferably 18,000 or larger, and more preferably 20,000 or larger. Meanwhile, the viscosity-average molecular weight of the polycarbonate resin (A1) is preferably 30,000 or smaller, and more preferably 27,000 or smaller.

In this invention, it is particularly preferred in the first embodiment of the polycarbonate resin that the polycarbonate resins (A1) and (A2) satisfy the aforementioned viscosity-average molecular weight.

The viscosity-average molecular weight of the polycarbonate resin (A3) is preferably 10,000 or larger, and more preferably 15,000 or larger. Meanwhile, the viscosity-average molecular weight of the polycarbonate resin (A3) is preferably 35,000 or smaller, more preferably 30,000 or smaller, even more preferably 26,000 or smaller, and yet more preferably 24,000 or smaller.

In this invention, it is particularly preferred that the aforementioned viscosity-average molecular weight is satisfied in the second embodiment of the polycarbonate resin.

The viscosity-average molecular weight may be measured according to the description in EXAMPLES descried later.

A method for manufacturing the polycarbonate resin is properly selectable without special limitation from known techniques. The method for manufacturing the polycarbonate resin is exemplified by melt transesterification, interfacial polymerization, pyridine method, ring-opening polymerization of cyclic carbonate compound, and solid-phase transesterification of prepolymer. Among them, the melt transesterification and interfacial polymerization are preferred, and melt transesterification is more preferred.

The resin composition of this invention, without inorganic filler contained therein, preferably contains 80% by mass or more of the polycarbonate resin, wherein the content is more preferably 85% by mass or more, more preferably 90% by mass or more, even more preferably 95% by mass or more, and may even be 98% by mass or more.

The resin composition of this invention, with inorganic filler contained therein, preferably contains 80% by mass or more in total of the polycarbonate resin and the inorganic filler, wherein the total content is more preferably 85% by mass or more, even more preferably 90% by mass or more, yet more preferably 95% by mass or more, and may even be 98% by mass or more.

Only one kind of the polycarbonate resin may be contained, or two or more kinds may be contained. In a case where two or more kinds are contained, the total content preferably falls within any of the aforementioned ranges.

<Inorganic Filler>

The resin composition of this invention may contain an inorganic filler, and preferably contains the inorganic filler. With the inorganic filler contained therein, the obtainable electronic/electric equipment component will have enhanced rigidity. On the other hand, blending of the inorganic filler generally tends to increase loss tangent. This invention can, however, successfully achieve low loss tangent even if the inorganic filler is blended, by virtue of blending of the polycarbonate resin that contains a certain amount of the structural unit represented by formula (1).

The inorganic filler is a substance that improves strength and/or rigidity of the resin component when contained therein, and may have any shape of fiber, plate, particle, or undefined shape, wherein fiber or plate shape is preferred. With use of fibrous or plate-like inorganic filler, only a relatively small amount of addition will successfully achieve high rigidity. In particular, use of fibrous inorganic filler can successfully achieve high rigidity with a relatively small amount of addition.

The inorganic filler used in this invention preferably has a raw aspect ratio (aspect ratio before melt-kneaded) of 2 or larger, which is more preferably 3 or larger, and even may be 20 or larger, 100 or larger, 150 or larger, and 200 or larger. The upper limit of the aspect ratio is typically 400 or below, preferably 350 or below, more preferably 300 or below, and even may be 260 or below.

The inorganic filler used in this invention preferably keeps an aspect ratio of 2 or larger in pellet or electronic/electric equipment component, which is more preferably 3 or larger, and may even be 5 or larger, and 8 or larger. The upper limit of the aspect ratio is typically 100 or below, which is preferably 60 or below, more preferably 50 or below, and even may be 40 or below.

The aspect ratio is a number-average value of aspect ratios of 100 freely selected inorganic fillers. More specifically, the aspect ratio is calculated from measured values of the lengths of the inorganic fillers to be examined, randomly extracted from an image observed under an optical microscope. The magnification of observation is set to 20×. The same will apply to the number-average length and so forth described later.

The inorganic filler, if having the fibrous shape, typically includes glass fiber, carbon fiber, silica-alumina fiber, zirconia fiber, boron fiber, boron nitride fiber, silicon nitride-potassium titanate fiber, metal fiber, and wollastonite. The inorganic filler, if having the fibrous shape, is preferably glass fiber.

The inorganic filler, if having the fibrous shape, preferably has a cross-sectional shape of circle, ellipse, oval, rectangle, rectangle combined with semicircles arranged on both short sides, or cocoon, among which circular shape is preferred. The circular shape herein conceptually encompasses not only mathematical circle, but also those usually understood as circle in the technical field of this invention.

The inorganic filler, if having the fibrous shape, preferably has a number-average fiber length of 0.1 to 10 mm, which is more preferably 1 to 5 mm. With use of the glass fiber having such number-average fiber length, the electronic/electric equipment component will have more improved mechanical strength. The lower limit of the number-average fiber diameter of the glass fiber is preferably 4.0 μm or above, more preferably 4.5 μm or above, and even more preferably

5.0 μm or above. The upper limit of the number-average fiber diameter of the glass fiber is preferably 15.0 μm or below, more preferably 14.0 μm or below, and even may be 12.0 μm or below. With use of the glass fiber having the number-average fiber diameter in this range, obtainable is an electronic/electric equipment component that excels in platability even after gone through heat-moisture treatment. The electronic/electric equipment component can keep excellent platability, even after stored for a long period, or after gone through heat-moisture treatment over a long time.

The fibrous inorganic filler is preferably glass fiber, and such glass fiber may be any of those obtainable by melt-spinning of commonly supplied glass such as E-glass (electrical glass), C-glass (chemical glass), A-glass (alkali glass), S-glass (high strength glass), or alkali resistant glass, without special limitation so long as it is obtainable in the form of glass fiber. The glass fiber in this invention preferably contains E-glass.

The glass fiber employed in this invention is preferably surface-treated with a surface treatment agent such as silane coupling agent which is exemplified by γ-methacryloxypropyl trimethoxysilane, γ-glycidoxypropyl trimethoxysilane, and γ-aminopropyl triethoxysilane. The amount of adhesion of the surface treatment agent is preferably 0.01 to 1% by mass of the glass fiber. Also applicable are glass fiber optionally coated with lubricant such as aliphatic acid amide compound or silicone oil; antistatic agent such as quaternary ammonium salt; film-forming resin such as epoxy resin or urethane resin; or mixture of film-forming resin with heat stabilizer, flame retardant or the like.

The glass fiber is commercially available. Commercially available product is exemplified by T-187, T-571, T-595, T-286H, T-756H and T-289H from Nippon Electric Glass Co., Ltd.; DEFT2A from Owwens Corning; HP3540 from PPG; and CSG3PA820 from Nitto Boseki Co., Ltd.

The inorganic filler, if not in fibrous shape, preferably has plate-like, particle-like, or undefined shape, wherein the plate-like shape is more preferred.

The plate-like inorganic filler functions to reduce the anisotropy and warpage, and is exemplified by glass flake, talc, mica, mica, kaolin, boron nitride, and metal foil. Talc and boron nitride are preferred as the plate-like inorganic filler.

The glass flake preferably has a number-average thickness of 0.5 to 20 μm, and a number-average length of 0.05 to 1.0 mm.

Other organic filler in the particle shape or undefined shape is exemplified by ceramic bead, glass bead, asbestos, clay, zeolite, potassium titanate, barium sulfate, titanium oxide, silicon oxide, aluminum oxide, and magnesium hydroxide.

The glass bead preferably has a number-average diameter of 5 to 100 μm.

Regarding the inorganic filler besides those described above, descriptions in paragraphs [0029] to [0031] of JP-2019-172712A, and in paragraphs [0075] to [0079] of JP-2017-110180A may be referred to, the contents of which are incorporated by reference into this patent specification.

The content of the inorganic filler (preferably the total content of at least one selected from the group consisting of glass fiber, talc, and, boron nitride, and more preferably the content of the glass fiber), per 100 parts by mass of the polycarbonate resin, is preferably 10 parts by mass or more and 100 parts by mass or less. With the content controlled to the lower limit value or above, the obtainable electronic/electric equipment component will have more improved rigidity. Meanwhile, with the content controlled to the upper limit value or below, the workability during manufacture tends to further improve.

The lower limit value of the content of the inorganic filler is adjustable depending on applications, and may typically be 15 parts by mass or more, per 100 parts by mass of the polycarbonate resin, which may also be 20 parts by mass or more, and may even be 30 parts by mass or more. Meanwhile, the upper limit value of the content of the inorganic filler, per 100 parts by mass of the polycarbonate resin, is preferably 80 parts by mass or below, more preferably 60 parts by mass or below, and even more preferably 40 parts by mass or below.

In the resin composition of this invention, the mass ratio of the structural unit represented by formula (1) in the polycarbonate resin, per 100 parts by mass of the inorganic filler, is preferably 150 parts by mass or larger. With the mass ratio controlled to 150 parts by mass or larger, it now becomes possible to keep the loss tangent low, while keeping the rigidity high. The mass ratio of the structural unit represented by formula (1) in the polycarbonate resin, per 100 parts by mass of the inorganic filler, is preferably 200 parts by mass or larger, more preferably 300 parts by mass or larger, and even more preferably 400 parts by mass or larger. Meanwhile, the upper limit value of the mass ratio of the structural unit represented by formula (1) in the polycarbonate resin, per 100 parts by mass of the inorganic filler, is preferably 2000 parts by mass or below, more preferably 1500 parts by mass or below, even more preferably 1200 parts by mass or below, and yet more preferably 1000 parts by mass or below. With the mass ratio controlled to the aforementioned upper limit value or below, the low loss tangent and proper scratch resistance may be balanced, and the heat resistance tends to improve.

The resin composition of this invention may contain only one kind of inorganic filler, or may contain two or more kinds. In a case where two or more kinds are contained, the total content preferably falls within any of the aforementioned ranges.

<Other Ingredients>

The resin composition of this invention may optionally contain other ingredient other than the aforementioned ingredients, without undermining various desired physical characteristics.
Such other ingredient is exemplified by thermoplastic resin other than the polycarbonate resin, and various resin additives.
The thermoplastic resin other than the polycarbonate resin is exemplified by impact modifier; and styrene-based resin or polyester resin other than the impact modifier.
The resin additive is exemplified by heat stabilizer, antioxidant, mold releasing agent, UV absorber, antistatic agent, flame retardant, flame retardant auxiliary, dye, pigment, anticlouding agent, lubricant, antiblocking agent, flow improver, plasticizer, dispersion aid, and antibacterial agent. Only one kind of the resin additive may be contained, or two or more kinds may be freely combined according to freely selectable ratio.

<<Impact Modifier>>

Regarding the impact modifier, descriptions in paragraphs [0069] to [0075] of JP-2019-135290A may be referred to, the contents of which are incorporated by reference in this patent specification.

<<Heat Stabilizer>>

For the heat stabilizer, phosphorus-containing stabilizer is preferably used.
Any of known phosphorus-containing stabilizers may be used. Specific examples include oxoacids of phosphorus such as phosphoric acid, phosphonic acid, phosphorous acid, phosphinic acid, and polyphosphoric acid; metal acid pyrophosphates such as sodium acid pyrophosphate, potassium acid pyrophosphate, and calcium acid pyrophosphate; phosphates of Group I or Group IIB metal such as potassium phosphate, sodium phosphate, cesium phosphate, and zinc phosphate; organophosphate compound, organophosphite compound, and organophosphonite compound, wherein organophosphite compound is particularly preferred.
The organophosphite compound is exemplified by triphenyl phosphite, tris(monononylphenyl) phosphite, tris(monononyl/dinonylphenyl) phosphite, tris(2,4-di-tert-butylphenyl) phosphite, monooctyldiphenyl phosphite, dioctylmonophenyl phosphite, monodecyldiphenyl phosphite, didecylmonophenyl phosphite, tridecyl phosphite, trilauryl phosphite, tristearyl phosphite, and 2,2-methylenebis(4,6-di-tert-butylphenyl)octyl phosphite.
Such organophosphite compound is specifically exemplified by "ADK STAB (registered trademark, the same shall apply hereinafter) 1178", "ADK STAB 2112", "ADK STAB HP-10", "AX-71" from ADEKA Corporation; "JP-351", "JP-360", and "JP-3CP" from Johoku Chemical Co., Ltd.; and "Irgafos (registered trademark, the same shall apply hereinafter) 168" from BASF SE.
The content of the heat stabilizer in the resin composition of this invention, per 100 parts by mass of the polycarbonate resin, is usually 0.001 parts by mass or more, preferably 0.005 parts by mass or more, and more preferably 0.01 parts by mass or more; meanwhile usually 1 part by mass or less, preferably 0.5 parts by mass or less, and more preferably 0.3 parts by mass or less. With the content of the heat stabilizer controlled within any of these ranges, the effect of addition of the heat stabilizer will be more efficiently demonstrated.
The resin composition of this invention may contain only one kind of the heat stabilizer, or may contain two or more kinds. In a case where two or more kinds are contained, the total content preferably falls within any of the aforementioned ranges.

<<Antioxidant>>

For the antioxidant, phenol-based antioxidant is preferred, and hindered phenol-based antioxidant is more preferred.
Specific examples of the hindered phenol-based antioxidant include pentaerythritoltetrakis[3-(3,5-di-tert-butyl-4-hydroxyphenyl) propionate], octadecyl-3-(3,5-di-tert-butyl-4-hydroxyphenyl) propionate, thiodiethylene bis[3-(3,5-di-tert-butyl-4-hydroxyphenyl) propionate], N,N'-hexane-1,6-diylbis[3-(3,5-di-tert-butyl-4-hydroxyphenyl)propionamide], 2,4-dimethyl-6-(1-methylpentadecyl)phenol, diethyl[[3,5-bis(1,1-dimethylethyl)-4-hydroxyphenyl]methyl] phosphate, 3,3',3",5,5',5"-hexa-*tert*-butyl-a,a',a"-(mesitylene-2,4,6-triyl)tri-p-cresol, 4,6-bis(octylthiomethyl)-*o*-cresol, ethylene bis(oxyethylene)bis[3-(5-*tert*-butyl-4-hydroxy-m-tolyl) propionate], hexamethylenebis[3-(3,5-di-*tert*-butyl-4-hydroxyphenyl) propionate], 1,3,5-tris(3,5-di-*tert*-butyl-4-hydroxybenzyl)-1,3,5-triazine-2,4,6(1H,3H,5H)-trione, 2,6-di-*tert*-butyl-4-(4,6-bis(octylthio)-1,3,5-triazine-2-ylamino)phenol, and 2-[1-(2-hydroxy-3,5-di-tert-pentylphenyl)ethyl]-4,6-di-*tert*-pentylphenyl acrylate.
Among them, pentaerythritoltetrakis[3-(3,5-di-*tert*-butyl-4-hydroxyphenyl) propionate], and octadecyl-3-(3,5-di-

tert-butyl-4-hydroxyphenyl) propionate are preferred. Such hindered phenol-based stabilizer is specifically exemplified by "Irganox (registered tradename, the same shall apply hereinafter) 1010" and "Irganox 1076" from BASF SE; and "ADK STAB AO-50" and "ADK STAB AO-60" from ADEKA Corporation.

The content of the antioxidant in the resin composition of this invention, per 100 parts by mass of the polycarbonate resin, is usually 0.001 parts by mass or more, preferably 0.005 parts by mass or more, more preferably 0.01 parts by mass or more; meanwhile usually 1 part by mass or less, preferably 0.5 parts by mass or less, and more preferably 0.3 parts by mass or less. With the content of the antioxidant controlled within any of these ranges, an effect of addition of the antioxidant will be more efficiently demonstrated.

The resin composition of this invention may contain only one kind of antioxidant, or may contain two or more kinds. In a case where two or more kinds are contained, the total content preferably falls within any of the aforementioned ranges.

<<Mold Releasing Agent>>

The mold releasing agent is exemplified by aliphatic carboxylic acid, ester formed between aliphatic carboxylic acid and alcohol, aliphatic hydrocarbon compound having a number-average molecular weight of 200 to 15,000, and polysiloxane-based silicone oil.

The aliphatic carboxylic acid is exemplified by saturated or unsaturated, monovalent, divalent, or trivalent aliphatic carboxylic acids. Now the aliphatic carboxylic acids encompass alicyclic carboxylic acid. Among them, the aliphatic carboxylic acid is preferably monovalent or divalent carboxylic acid having 6 to 36 carbon atoms, and more preferably saturated aliphatic monovalent carboxylic acid having 6 to 36 carbon atoms. Such aliphatic carboxylic acid is specifically exemplified by palmitic acid, stearic acid, caproic acid, capric acid, lauric acid, arachic acid, behenic acid, lignoceric acid, cerotic acid, melissic acid, tetratriacontanoic acid, montanoic acid, adipic acid, and azelaic acid.

The aliphatic carboxylic acid in the ester formed between aliphatic carboxylic acid and alcohol, employable here, may be same as the aforementioned aliphatic carboxylic acid. Meanwhile, the alcohol is exemplified by saturated or unsaturated, monohydric, or polyhydric alcohols. These alcohols may have a substituent such as fluorine atom or aryl group. Among them, monohydric or polyhydric saturated alcohol having 30 or less carbon atoms is preferred, and saturated aliphatic monohydric alcohol or saturated aliphatic polyhydric alcohol having 30 or less carbon atoms is more preferred. Now, "aliphatic" encompass "alicyclic".

Such alcohol is specifically exemplified by octanol, decanol, dodecanol, stearyl alcohol, behenyl alcohol, ethylene glycol, diethylene glycol, glycerin, pentaerythritol, 2,2-dihydroxyperfluoropropanol, neopentylene glycol, ditrimethylolpropane, and dipentaerythritol.

Note that the ester may contain aliphatic carboxylic acid and/or alcohol as an impurity. The ester may be a pure substance, or may be a mixture of a plurality of compounds. Each of the aliphatic carboxylic acid and the alcohol that combine to form one ester may be used singly, or may be used while freely combining two or more kinds according to freely selectable ratio.

Specific examples of the ester formed between the aliphatic carboxylic acid and the alcohol include, beeswax (mixture mainly composed of myricyl palmitate), stearyl stearate, behenyl behenate, stearyl behenate, glycerin monopalminate, glycerin monostearate, glycerin distearate, glycerin tristarate, pentaerythritol monopalminate, pentaerythritol monostearate, pentaerythritol distearate, pentaerythritol tristearate, and pentaerythritol tetrastearate.

Besides the aforementioned compounds, ester compounds described in paragraphs [0029] to [0073] of WO2019/078162 are applicable to the mold releasing agent, the contents of which are incorporated by reference into this patent specification.

The content of the mold releasing agent in the resin composition of this invention, per 100 parts by mass in total of the polycarbonate resin and optional other resin ingredient, is usually 0.001 parts by mass or more, and preferably 0.01 parts by mass or more; meanwhile usually 2 parts by mass or less, preferably 1 part by mass or less, and more preferably 0.6 parts by mass or less. With the content of the mold releasing agent controlled to any of the lower limit values of the aforementioned ranges or above, the effect of mold releasing agent will be more effectively demonstrated, meanwhile with the content controlled to any of the upper limit values of the aforementioned ranges or below, lowering of the hydrolysis resistance, contamination of dies during injection molding and so forth may be more effectively suppressed. Although highly transparent electronic/electric equipment component is obtainable irrespective of the content of the mold releasing agent, the hardness and heat resistance will tend to further improve, by controlling the content not higher than the upper limit values of the aforementioned ranges.

Only one kind of the mold releasing agent may be contained, or two or more kinds may be contained. In a case where two or more kinds are contained, the total content preferably falls within any of the aforementioned ranges.

<<Flame Retardant>>

The polycarbonate resin composition of this invention, with a flame retardant added thereto, can demonstrate further remarkable effect, and improved flame retardancy. Preferred flame retardant to be employed is exemplified by metal sulfonate-based flame retardant, bromine-containing flame retardant, phosphorus-containing flame retardant and silicon-containing compound-based flame retardant. Among them, metal sulfonate-based flame retardant, bromine-containing flame retardant, and phosphorus-containing flame retardant are more preferred, and metal sulfonate-based flame retardant, and phosphorus-containing flame retardant are even more preferred.

The content of the flame retardant in the resin composition of this invention, per 100 parts by mass of the polycarbonate resin, is usually 0.001 parts by mass or more, preferably 0.01 parts by mass or more, and more preferably 0.05 parts by mass or more, meanwhile, usually 30 parts by mass or less, preferably 25 parts by mass or less, and more preferably 20 parts by mass or less. With the content of the flame retardant controlled to 0.001 parts by mass or more, the flame retardant effect will be more effectively demonstrated. With the content of the flame retardant controlled to 30 parts by mass or less, the obtainable electronic/electric equipment component will tend to improve the mechanical strength.

The resin composition of this invention may contain only one kind of the flame retardant, or may contain two or more kinds. In a case where two or more kinds are contained, the total content preferably falls within any of the aforementioned ranges.

The metal sulfonate-based flame retardant is exemplified by metal aliphatic sulfonate, and metal aromatic sulfonate. Metals in these metal salts are exemplified by the Group I metals in the long-form periodic table such as sodium, lithium, potassium, rubidium, and cesium; magnesium family elements such as beryllium and magnesium; and the Group II elements in the long-form periodic table such as calcium, strontium, and barium. The metal sulfonate may be used singly, or in the form of mixture of two or more kinds. The metal sulfonate is preferably metal aromatic sulfone sulfonate, or metal perfluoroalkanesulfonate, and is particularly preferably metal perfluoroalkanesulfonate.

The metal aromatic sulfone sulfonate is preferably exemplified by alkali metal aromatic sulfone sulfonate, and alkali earth metal aromatic sulfone sulfonate. The alkali metal aromatic sulfone sulfonate, or the alkali earth metal aromatic sulfone sulfonate may be a polymer.

Specific examples of the metal aromatic sulfone sulfonate include sodium diphenylsulfone-3-sulfonate, potassium diphenylsulfone-3-sulfonate, sodium 4,4'-dibromodiphenyl-sulfone-3-sulfonate, potassium 4,4'-dibromodiphenyl-sulfone-3-sulfonate, calcium 4-chloro-4'-nitrodiphenylsulfone-3-sulfonate, disodium diphenylsulfone-3,3'-disulfonnate, and dipotassium diphenylsulfone-3,3'-disulfonate.

The metal perfluoroalkanesulfonate is preferably exemplified by alkali metal perfluoroalkanesulfonate, and alkali earth metal perfluoroalkanesulfonate, and more preferably exemplified by alkali metal sulfonate with a perfluoroalkane group having 4 to 8 carbon atoms, and alkali earth metal sulfonate with a perfluoroalkane group having 4 to 8 carbon atoms.

The metal perfluoroalkanesulfonate is specifically exemplified by sodium perfluorobutanesulfonate, potassium perfluorobutanesulfonate, sodium perfluoromethylbutanesulfonate, potassium perfluoromethylbutanesulfonate, sodium perfluorooctanesulfonate, potassium perfluorooctanesulfonate, and tetraethylammonium perfluorobutanesulfonate.

The content of the metal sulfonate-based flame retardant (preferably metal perfluoroalkanesulfonate), per 100 parts by mass of the polycarbonate resin, is preferably 0.01 parts by mass or more, more preferably 0.03 parts by mass or more, even more preferably 0.04 parts by mass or more, and particularly preferably 0.06 parts by mass or more. Meanwhile, the content of the metal sulfonate-based flame retardant, per 100 parts by mass of the polycarbonate resin, is preferably 1 part by mass or less, more preferably 0.5 parts by mass or less, even more preferably 0.3 parts by mass or less, and particularly preferably 0.2 parts by mass or less.

The resin composition of this invention may contain only one kind of the metal sulfonate-based flame retardant, or may contain two or more kinds. In a case where two or more kinds are contained, the total content preferably falls within any of the aforementioned ranges.

Specific examples of the bromine-containing flame retardant typically include brominated epoxy resins such as tetrabromobisphenol A, tribromophenol, brominated aromatic triazine, tetrabromobisphenol A epoxy oligomer, and tetrabromobisphenol A epoxy polymer; decabromodiphenyl oxide; tribromoallyl ether; brominated benzyl (meth)acrylate such as pentabromobenzyl polyacrylate; brominated polyphenylene ether; brominated phenoxy resin; brominated polycarbonates such as glycidyl brominated bisphenol A, tetrabromobisphenol A carbonate oligomer, and tetrabromobisphenol A carbonate polymer; brominated imide such as ethylene bistetrabromophthalimide; decabromodiphenylethane; brominated polystyrene; and hexabromocyclododecane. Among them, brominated benzyl (meth)acrylate, brominated epoxy resin, brominated polystyrene, and brominated imide are preferred; and brominated benzyl (meth)acrylate, brominated polystyrene, brominated polycarbonate, and brominated imide are more preferred, for their good heat stability; and brominated polystyrene, brominated polycarbonate and brominated imide are further preferred.

The content of the bromine-containing flame retardant, per 100 parts by mass of the polycarbonate resin, is

preferably 2 to 30 parts by mass, more preferably 10 to 28 parts by mass, and even more preferably 15 to 25 parts by mass.

The resin composition of this invention may contain only one kind of the bromine-containing flame retardant, or may contain two or more kinds. In a case where two or more kinds are contained, the total content preferably falls within any of the aforementioned ranges.

The phosphorus-containing flame retardant is exemplified by red phosphorus, coated red phosphorus, polyphosphate-based compound, phosphate ester-based compound, and phosphazene-based compound. Among them, phosphate ester-based compound is preferred, and aromatic condensed phosphate ester-based compound is more preferred.

The phosphate ester compound may be a low-molecular compound, oligomer, or polymer, wherein specific examples include trimethyl phosphate, triethyl phosphate, tributyl phosphate, trioctyl phosphate, tributoxyethyl phosphate, triphenyl phosphate, tricresyl phosphate, cresyldiphenyl phosphate, octyldiphenyl phosphate, diisopropylphenyl phosphate, tris(chloroethyl) phosphate, tris(dichloropropyl) phosphate, tris(chloropropyl) phosphate, bis(2,3-dibromopropyl)-2,3-dichloropropyl phosphate, tris(2,3-dibromopropyl) phosphate, bis(chloropropyl)monooctyl phosphate, bisphenol A bisphosphate, hydroquinone bisphosphate, resorcinol bisphosphate, and trioxybenzene triphosphate; as well as condensed phosphate esters such as phenylresorcinol polyphosphate, cresylresorcinol polyphosphate, phenylcresylresorcinol polyphosphate, xylylresorcinol polyphosphate, phenyl-p-tert-butylphenylresorcinol polyphosphate, phenylisopropylphenylresorcinol polyphosphate, cresylxylylresorcinol polyphosphate, phenylisopropylphenyldiisopropylphenylresorcinol polyphosphate. Among them, condensed phosphate ester is preferred from the viewpoint of heat stability.

The content of the phosphorus-containing flame retardant (preferably aromatic condensed phosphate ester-based flame retardant), per 100 parts by mass of the polycarbonate resin, is preferably 2 parts by mass or more, more preferably 3 parts by mass or more, even more preferably 4 parts by mass or more, and yet more preferably 5 parts by mass or more. Meanwhile the content of the phosphorus-containing flame retardant, per 100 parts by mass of the polycarbonate resin, is preferably 30 parts by mass or less, more preferably 25 parts by mass or less, even more preferably 16 parts by mass or less, yet more preferably 10 parts by mass or less, and furthermore preferably 8 parts by mass or less.

The resin composition of this invention may contain only one kind of the phosphorus-containing flame retardant, or may contain two or more kinds. In a case where two or more kinds are contained, the total content preferably falls within any of the aforementioned ranges.

The silicon-containing compound-based flame retardant is exemplified by silicone varnish; silicone resin whose substituent, bound to the silicon atom, is composed of an aromatic hydrocarbon group and an aliphatic hydrocarbon group having two or more carbon atoms; silicone compound whose principal chain is branched, and an organic functional group contained therein has an aromatic group; silicone powder in which an optionally substituted poly(diorganosiloxane) polymer is immobilized on the surface of silica powder; and organopolysiloxane-polycarbonate copolymer.

The content of the silicon-containing compound-based flame retardant, per 100 parts by mass of the polycarbonate resin, is 2 to 30 parts by mass, more preferably 3 to 25 parts by mass, and even more preferably 4 to 20 parts by mass.

The resin composition of this invention may contain only one kind of the silicon-containing compound-based flame retardant, or may contain two or more kinds. In a case where two or more kinds are contained, the total content preferably falls within any of the aforementioned ranges.

<<Anti-Dripping Agent>>

The polycarbonate resin composition of this invention may contain an anti-dripping agent. With the anti-dripping agent contained therein, melt characteristic of the resin composition may be improved, and more specifically, the anti-dripping property during combustion may be improved.

Fluoropolymer is preferred as the anti-dripping agent. The fluoropolymer may be used singly, or may be used while freely combining two or more kinds according to freely selectable ratio.

The fluoropolymer is exemplified by fluoroolefin resin. The fluoroolefin resin is usually a polymer or a copolymer that contains a fluoroethylene structure, and is specifically exemplified by difluoroethylene resin, tetrafluoroethylene resin, tetrafluoroethylene /hexafluoropropylene copolymer resin. Among them, tetrafluoroethylene resin is preferred. The fluoroethylene resin is exemplified by fibril-forming fluoroethylene resin.

The fibril-forming fluoroethylene resin is exemplified by "Teflon (registered trademark) 6J" from Du Pont-Mitsui Fluorochemicals Co., Ltd.; and "Polyflon (registered trademark) F201L", "Polyflon (registered trademark) F103", and "Polyflon (registered trademark) FA500B" from Daikin Industries, Ltd. Commercially available product of a water-base dispersion of fluoroethylene resin is exemplified by "Teflon (registered trademark) 30J", and "Teflon (registered trademark) 31-JR" from Du Pont-Mitsui Fluorochemicals Co., Ltd.; and "Fluon (registered trademark) D-1" from Daikin Industries, Ltd. Also employable is a fluoroethylene polymer having a multi-layered structure obtained by polymerizing vinyl monomers. This sort of fluoroethylene polymer is exemplified by polystyrene-fluoroethylene composite, polystyrene-acrylonitrile-fluoroethylene composite, methyl polymethacrylate-fluoroethylene composite, and butyl polymethacrylate-fluoroethylene composite, wherein specific examples include "Metablen (registered trademark) A-3800" from Mitsubishi Rayon Co., Ltd., and "Blendex (registered trademark) 449" from GEO Specialty Chemicals, Inc. The anti-dripping agent may be used singly, or may be used while freely combining two or more kinds according to freely selectable ratio.

The content of the anti-dripping agent, per 100 parts by mass of the is polycarbonate resin, is preferably 0.01 parts by mass or more, more preferably 0.05 parts by mass or more, even more preferably 0.08 parts by mass or more, yet more preferably 0.1 parts by mass or more, and furthermore preferably 0.2 parts by mass or more. Meanwhile, the content of the anti-dripping agent, per 100 parts by mass of the polycarbonate resin, is preferably 1 part by mass or less, more preferably 0.8 parts by mass or less, and even more preferably 0.5 parts by mass or less. With the anti-dripping agent contained in this way, the melt characteristic of the resin composition may be improved, and more specifically, the anti-dripping property during combustion may be improved.

<<UV Absorber>>

Regarding the UV absorber, descriptions in paragraphs [0059] to [0062] of JP-2016-216534A may be referred to, the contents of which are incorporated by reference into this patent specification.

<<Antistatic Agent>>

Regarding the antistatic agent, descriptions in paragraphs [0063] to [0067] of JP-2016-216534A may be referred to, the contents of which are incorporated by reference into this patent specification.

<Characteristics of Resin Composition>

Next, preferred characteristics of the resin composition of this invention will be explained.

The resin composition of this invention may demonstrate a pencil hardness of "H" or larger, when formed into a flat plate and measured in compliance with JIS K5600, wherein the pencil hardness may be 2H or larger, and may even be 3H or larger. The upper limit of the pencil hardness, although not specifically limited, may typically be 5H or below, and may even be 4H or below, which is enough to satisfy required performances. In this invention, with use of the polycarbonate resin that contains the structural unit represented by formula (1), the scratch resistance may be improved.

The resin composition of this invention may demonstrate a loss tangent of 0.0053 or smaller, when formed into a flat plate and measured at a frequency of 2.45 GHz, wherein the loss tangent may be 0.0050 or smaller, and even may be 0.0045 or smaller. The lower limit value of the loss tangent at a frequency of 2.45 GHz, although not specifically limited, is practically 0.0010 or above. With use of the polycarbonate resin that contains the structural unit represented by formula (1) in this invention, the loss tangent may be lowered.

The resin composition of this invention preferably demonstrates UL 94 V-0 flame retardance, when formed into a flat plate of 1.5 mm thick.

<Method for Manufacturing Resin Composition>

A wide variety of known methods are applicable to manufacture the resin composition of this invention, without special limitation, by which the polycarbonate resin, and the optionally added other ingredients are preliminarily mixed typically by using a variety of mixers such as tumbler or Henschel mixer, and then melt-kneaded by using a mixer such as banbury mixer, roll mixer, Brabender mixer, single-screw kneader/extruder, twin-screw kneader/extruder, or kneader.

Temperature of melt kneading is usually in the range from 240 to 320°C, although not specifically limited thereto.

<Electronic/Electric Equipment Component>

The aforementioned resin composition (pellet, for example) is formed by any of various forming methods into the electronic/electric equipment component. That is, the electronic/electric equipment component of this invention is formed of the resin composition of this invention.

Shape of the electronic/electric equipment component is properly selectable, without special limitation, depending on applications and purposes of the electronic/electric equipment component, typically from film-like, cylindrical rod-like, annular, circular, elliptic, polygonal, shape-modified, hollow, frame-like, box-like, panel-like, and button-like shapes. Among them, film-like, frame-like, panel-like, or button-like shape is preferred. For the frame-like or the panel-like shape, the thickness is typically around 1 mm to 5 mm.

Method for forming the electronic/electric equipment component may employ, without special limitation, any of known methods of forming that are exemplified by injection molding, injection compression molding, extrusion molding,

profile extrusion, transfer molding, hollow molding, gas-assisted molding, blow molding, extrusion blow molding, IMC (in-molding coating), rotational molding, multi-layer molding, two-color molding, insert molding, sandwich molding, foam molding, and pressure molding. The resin composition of this invention is particularly suitable for the electronic/electric equipment component obtainable by injection molding, injection compression molding, or extrusion molding. Of course, the resin composition of this invention is not limited to the electronic/electric equipment component obtainable by these methods.

The resin composition of this invention is applicable to the electronic/electric equipment component used with an electromagnetic wave at a frequency of 1 GHz or higher. The electromagnetic wave at a frequency of 1 GHz or higher may transmit through at least a part of the electronic/electric equipment component. Now, the electronic/electric equipment component of this invention is applicable over a wide frequency band at 1 GHz or higher, and is usually applicable to a frequency band from 1 to 20 GHz, particularly from 1 to 10 GHz, and preferably from 1 to 3 GHz.

More specifically, the electronic/electric equipment component of this invention is applicable to enclosure of electronic/electric equipment; circuit board; interlayer insulating film for semiconductor device; antenna component; insulating parts; insulating material for high-frequency coaxial cable; base components such as resistor, switch, capacitor, and photosensor; IC socket and connector; transportation equipment such as automobile, bicycle, motorcycle, truck, railway vehicle, helicopter, and aircraft; construction machines such as bulldozer, hydraulic shovel, and crane; vessels such as merchant ship, special purpose ship, fishing vessel, and naval vessel; agricultural machines such as tractor, and harvester; and mechanical parts of mobile phone, tablet computer, wearable device, computer, television set, VR goggles, camera, loudspeaker, drone, robot, sensor, medical instrument, and analytical instrument, and is particularly preferably applicable to enclosure of electronic/electric equipment.

## EXAMPLES

This invention will further be detailed referring to Examples. Materials, amounts of consumption, ratios, process details, process procedures and so forth described in Examples below may suitably be modified without departing from the spirit of this invention. The scope of this invention is therefore not limited to the specific Examples below.

### 1. Raw Materials

Materials listed in Table 1 below were used.

[Table 1]

| Material | Type |
|---|---|
| PC (A1) | 2,2-Bis-(4-hyd roxy-3-methylphenyl)propane-type aromatic polycarbonate, synthesized according to Exemplary Synthesis described below. Mv=18,000 |
| PC (A2) | Iupilon E-2000, from Mitsubishi Engineering-Plastics Corporation, 2,2-bis-(4-hydroxyphenyl)propane-type aromatic polycarbonate. Mv=26,000 |
| PC (A3-1) | 2,2-Bis-(4-hydroxyphenyl)propane / 2,2-bis-(4-hydroxy-3-methylphenyl)propane copolymer-type aromatic polycarbonate, synthesized according to Exemplary Synthesis described below. Ratio of copolymerization (mass ratio) = 48 : 52, Mv=18,000 |
| PC (A3-2) | 2,2-Bis-(4-hydroxyphenyl)propane / 1,1-bis-(4-hydroxy-3-methylphenyl)cyclohexane copolymer-type aromatic polycarbonate, synthesized according to Exemplary Synthesis described below. Ratio of copolymerization (mass ratio) = 44 : 56, Mv=18,000 |
| Glass fiber | T-187 from Nippon Electric Glass Co., Ltd., aspect ratio = 230, aspect ratio after compounding = 10 to 30 |
| Heat stabilizer | ADK STAB 2112 from ADEKA Corporation |
| Antioxidant | ADK STAB AO-50 from ADEKA Corporation |
| Mold releasing agent | LOXIOL VPG861, from Cognis Japan, Ltd. |
| Flame retardant (B1) | BioWet C4, from Lanxess AG |
| Flame retardant (B2) | PX200, from Daihachi Chemical Industry Co., Ltd. |
| Anti-dripping agent | PTFE 6-J, from Du Pont-Mitsui Fluorochemicals Co., Ltd. |

<Exemplary Synthesis of PC (A1)>

One hundred mol% of 2,2-bis(4-hydroxy-3-methylphenyl)propane, 103 mol% of diphenyl carbonate (DPC), and $1.5 \times 10^{-6}$ mol% of cesium carbonate as a catalyst were precisely weighed, to prepare a mixture. The mixture was then placed in a first reactor having an inner capacity of 200 L, and equipped with a stirrer, a heat medium jacket, a vacuum pump, and a reflux condenser.

Next, the inside of the first reactor was evacuated down to 1.33 kPa (10 Torr), and then returned to the atmospheric pressure with nitrogen. This cycle was repeated five times, to replace the inside of the first reactor with nitrogen. After the replacement with nitrogen, a heat medium at 230°C was circulated through the heat medium jacket to gradually elevate the inner temperature of the first reactor, thereby melting the mixture. The stirrer was then rotated at 55 rpm, and the inner temperature of the first reactor was kept at 220°C, while controlling temperature in the heat medium jacket. The pressure in the first reactor was reduced from 101.3 kPa (760 Torr) down to 13.3 kPa (100 Torr) in terms of absolute pressure over 40 minutes, while distilling off phenol which is by-produced as a result of oligomerization between the aromatic dihydroxy compound and DPC, proceeded in the first reactor.

Next, while keeping the pressure in the first reactor at 13.3 kPa and further distilling off the phenol, transesterification was allowed to proceed over 80 minutes.

The system pressure was then brought back to an absolute pressure of 101.3 kPa with nitrogen, elevated to a gauge pressure of 0.2 MPa, and the oligomer in the first reactor was pressure-fed through a transfer pipe preheated to 200°C or higher to a second reactor. The second reactor has an inner volume of 200 L, equipped with a stirrer, a heat medium jacket, a vacuum pump, and a reflux condenser, with the inner pressure controlled to the atmospheric pressure, and with the inner temperature controlled to 240°C.

The oligomer having been pressure-fed into the second reactor was stirred at 16 rpm, the inner temperature was elevated with the aid of the heat medium jacket, and the inner pressure of the second reactor was reduced from 101.3 kPa to 13.3 kPa in terms of absolute pressure over 40 minutes. The temperature elevation was maintained thereafter, and the inner pressure was further reduced from 13.3 kPa to 399 Pa (3 Torr) in terms of absolute pressure over additional 40 minutes, while removing the distilled phenol out of the system. The temperature elevation was further continued, and the absolute pressure in the second reactor was kept at 70 Pa (ca. 0.5 Torr) upon arrival thereat and thereafter, thereby allowing the condensation polymerization to proceed. The final inner temperature in the second reactor was found to be 285°C. The condensation polymerization was terminated, upon arrival of the stirrer of the second reactor at a predetermined stirring power.

The inside of the second reactor was then brought back to an absolute pressure of 101.3 kPa with nitrogen, elevated to a gauge pressure of 0.2 MPa, and the aromatic polycarbonate resin was then drawn out in the form of strand from the bottom of the second reactor, and pelletized with a rotary cutter while cooling the strand in a water bath.

The thus obtained pellet was blended with butyl p-toluenesulfonate whose molar quantity is four times that of cesium carbonate, the blend was fed to a twin-screw extruder, extruded through a die of the extruder into strand, and cut with the cutter, to obtain an aromatic polycarbonate resin PC (A1) in which the polymerization catalyst was inactivated.

<Exemplary Synthesis of PC (A3-1)>

Fifty mol% of 2,2-bis(4-hydroxyphenyl)propane, 50 mol% of 2,2-bis(4-hydroxy-3-methylphenyl)propane, 103 mol% of diphenyl carbonate (DPC) and $1.5 \times 10^{-6}$ mol% of cesium carbonate (Cat) as a catalyst were precisely weighed, to prepare a mixture. The mixture was then placed in the first reactor having an inner capacity of 200 L, and equipped with a stirrer, a heat medium jacket, a vacuum pump, and a reflux condenser.

Procedures were then conducted similarly to those for PC (A1), to obtain an aromatic polycarbonate resin PC (A3-1).

<Exemplary Synthesis of PC (A3-2)>

Fifty mol% of 2,2-bis(4-hydroxyphenyl)propane, 50 mol% of 2,2-bis(4-hydroxy-3-methylphenyl)cyclohexane, 103 mol% of diphenyl carbonate (DPC), and $1.5 \times 10^{-6}$ mol% of cesium carbonate (Cat) as a catalyst were precisely weighed, to prepare a mixture. The mixture was then placed in the first reactor having an inner capacity of 200 L, and equipped with a stirrer, a heat medium jacket, a vacuum pump, and a reflux condenser.

Procedures were then conducted similarly to those for PC (A1), to obtain an aromatic polycarbonate resin PC (A3-2).

<Measurement of Viscosity-Average Molecular Weight (Mv) of Polycarbonate Resins>

The viscosity-average molecular weight (Mv) of each polycarbonate resin was determined by finding the limiting

viscosity (η) (in dL/g) at 20°C in methylene chloride as a solvent, with use of an Ubbelohde viscometer, and calculated from the Schnell's viscosity equation below:

$$\eta = 1.23 \times 10^{-4}\ Mv^{0.83}$$

<Ratio of Formula (1) (Mass Ratio of Structural Unit Represented by Formula (1) in Polycarbonate Resin>

The mass ratio of the structural unit represented by formula (1) in the polycarbonate resin was calculated from the mixing ratio of resins, molecular weight of the molecule that composes the structural unit represented by formula (1), and the viscosity-average molecular weight.

2. Example 1 to Example 20, Comparative Example 1 to Comparative Example 5

<Manufacture of Resin Composition Pellet (Compound)>

The individual ingredients listed in Table 1 above (excluding glass fiber) were blended according to ratios summarized in Table 2 to Table 5 below (all denoted in parts by mass), each mixture was uniformly mixed in a tumbler mixer for 20 minutes, fed into an extruder through a barrel provided on the upstream side of the extruder, by using a twin-screw extruder (TEM26SX, from Toshiba Machine Co., Ltd.) at a cylinder preset temperature of 280°C, a screw rotation speed of 250 rpm, and an ejection rate of 20 kg/hr, and melt-kneaded. The glass fiber was fed into the twin-screw extruder through a side feeder. After the melt-kneading, the molten resin composition was extruded into strand and rapidly cooled in a cooling water bath, pelletized with a pelletizer, to obtain pellet.

The obtained pellet was preliminarily dried by using a hot air dryer at 100°C for 6 hours, and extruded with use of an extruder (NEX80) from Nissei Plastic Industrial Co., Ltd., under conditions including a cylinder temperature of 280°C, a die temperature of 80°C, and a molding cycle of 50 seconds, to manufacture a 100 mm × 100 mm × 2 mm flat specimen. The pellets in Comparative Examples 1, 3 and 5 were dried at 120°C.

<Loss Tangent>

The loss tangent of the 100 mm × 1.5 mm × 2 mm flat specimen made of each resin composition was measured by the perturbation method at a frequency of 2.45 GHz.

More specifically, the 100 mm × 1.5 mm × 2 mm flat specimen was cut out from the flat specimen manufactured by the aforementioned method, and the loss tangent at a frequency of 2.45 GHz was measured by using a network analyzer from Keysight Technologies, Inc., and a cavity resonator from Kanto Electronic Application and Development, Inc.

Results are summarized in Table 2 to Table 5.

<Measurement of Pencil Hardness>

Pencil hardness of the thus obtained flat specimen was measured in compliance with JIS K5600 by using a pencil hardness tester under 1 kg load.

The pencil hardness tester was a product of Toyo Seiki Seisaku-sho, Ltd.

Results are summarized in Table 2 to Table 5.

<Flame Retardance: UL 94 (1.5 mm thick)>

Each of thus obtained pellets (only those in Examples 17 to 20) was preliminarily dried by using a hot air dryer at 100°C for 6 hours, and extruded by using an injection molding machine (SE-100) from Sumitomo Heavy Industries, Ltd., under conditions including a cylinder temperature 280°C, and a die temperature of 80°C, to manufacture a 125 mm × 13 mm × 1.5 mm thick specimen for flammability test.

The thus obtained flammability test specimen was subjected to vertical flammability test in compliance with UL 94. Results of flammability test was rated as V-0, V-1, and V-2 in descending order of excellence, and as NG for non-standard.

Results are summarized in Table 5 (Examples 17 to 20).

[Table 2-1]

| | Example 1 | Example 2 | Example 3 | Example 4 |
|---|---|---|---|---|
| PC (A1) | 66 | 80 | 100 | 66 |
| PC (A2) | 34 | 20 | 0 | 34 |
| PC (A3-1) | | | | |
| PC (A3-2) | | | | |
| Ratio of formula (1) | 66 | 80 | 100 | 66 |
| Glass fiber | 11.3 | 11.3 | 11.3 | 25.4 |
| Heat stabilizer | 0.03 | 0.03 | 0.03 | 0.03 |
| Antioxidant | 0.11 | 0.11 | 0.11 | 0.11 |
| Mold releasing agent | 0.56 | 0.56 | 0.56 | 0.56 |
| Loss tangent | 0.0029 | 0.0025 | 0.0021 | 0.0035 |
| Pencil hardness | H | 2H | 3H | 2H |

[Table 2-2]

| | Example 5 | Example 6 | Example 7 | Example 8 |
|---|---|---|---|---|
| PC (A1) | 80 | 100 | 50 | 80 |
| PC (A2) | 20 | 0 | 50 | 20 |
| PC (A3-1) | | | | |
| PC (A3-2) | | | | |
| Ratio of formula (1) | 80 | 100 | 50 | 80 |
| Glass fiber | 25.4 | 25.4 | 33.9 | 33.9 |
| Heat stabilizer | 0.03 | 0.03 | 0.03 | 0.03 |
| Antioxidant | 0.11 | 0.11 | 0.11 | 0.11 |
| Mold releasing agent | 0.56 | 0.56 | 0.56 | 0.56 |
| Loss tangent | 0.0031 | 0.0028 | 0.0049 | 0.0039 |
| Pencil hardness | 3H | 4H | 3H | 4H |

[Table 3-1]

| | Example 9 | Example 10 | Example 11 | Example 12 |
|---|---|---|---|---|
| PC (A1) | | | 100 | 85 |
| PC (A2) | | | | 15 |
| PC (A3-1) | 100 | | | |
| PC (A3-2) | | 100 | | |
| Ratio of formula (1) | 52 | 56 | 100 | 85 |
| Glass fiber | 33.9 | 33.9 | | |
| Heat stabilizer | 0.03 | 0.03 | 0.03 | 0.03 |
| Antioxidant | 0.11 | 0.11 | 0.10 | 0.10 |
| Mold releasing agent | 0.56 | 0.56 | 0.30 | 0.30 |

(continued)

| | Example 9 | Example 10 | Example 11 | Example 12 |
|---|---|---|---|---|
| Loss tangent | 0.0041 | 0.0039 | 0.0014 | 0.0017 |
| Pencil hardness | 3H | 3H | 2H | 2H |

[Table 3-2]

| | Example 13 | Example 14 | Example 15 | Example 16 |
|---|---|---|---|---|
| PC (A1) | 75 | 50 | | |
| PC (A2) | 25 | 50 | | |
| PC (A3-1) | | | 100 | |
| PC (A3-2) | | | | 100 |
| Ratio of formula (1) | 75 | 50 | 52 | 56 |
| Glass fiber | | | | |
| Heat stabilizer | 0.03 | 0.03 | 0.03 | 0.03 |
| Antioxidant | 0.10 | 0.10 | 0.10 | 0.10 |
| Mold releasing agent | 0.30 | 0.30 | 0.30 | 0.30 |
| Loss tangent | 0.0022 | 0.0028 | 0.0025 | 0.0023 |
| Pencil hardness | 2H | H | H | H |

[Table 4]

| | Comparative Example 1 | Comparative Example 2 | Comparative Example 3 | Comparative Example 4 | Comparative Example 5 |
|---|---|---|---|---|---|
| PC (A1) | 0 | 30 | 0 | 30 | |
| PC (A2) | 100 | 70 | 100 | 70 | 100 |
| PC (A3-1) | | | | | |
| PC (A3-2) | | | | | |
| Ratio of formula (1) | 0 | 30 | 0 | 30 | 0 |
| Glass fiber | 25.4 | 25.4 | 33.9 | 33.9 | |
| Heat stabilizer | 0.03 | 0.03 | 0.03 | 0.03 | 0.03 |
| Antioxidant | 0.11 | 0.11 | 0.11 | 0.11 | 0.10 |
| Mold releasing agent | 0.56 | 0.56 | 0.56 | 0.56 | 0.30 |
| Loss tangent | 0.0066 | 0.0056 | 0.0071 | 0.0059 | 0.0056 |
| Pencil hardness | F | 2H | H | 2H | 2B |

[Table 5]

| | Example 17 | Example 18 | Example 19 | Example 20 |
|---|---|---|---|---|
| PC (A1) | 66 | 66 | 100 | 100 |

(continued)

| | Example 17 | Example 18 | Example 19 | Example 20 |
|---|---|---|---|---|
| PC (A2) | 34 | 34 | 0 | 0 |
| PC (A3-1) | | | | |
| PC (A3-2) | | | | |
| Ratio of formula (1) | 66 | 66 | 100 | 100 |
| Glass fiber | 11.2 | 11.9 | 25.3 | 27.00 |
| Heat stabilizer | 0.03 | 0.04 | 0.04 | 0.04 |
| Antioxidant | 0.11 | 0.12 | 0.13 | 0.14 |
| Mold releasing | 0.56 | 0.59 | 0.63 | 0.68 |
| Flame retardant (B1) | 0.09 | | 0.10 | |
| Flame retardant (B2) | | 5.95 | | 6.75 |
| Antidripping agent | 0.34 | 0.36 | 0.38 | 0.41 |
| Loss tangent | 0.0029 | 0.0030 | 0.0028 | 0.0029 |
| Pencil hardness | H | H | 4H | 4H |
| Flame retardance (1.5 mm thick) | V-0 | V-0 | V-0 | V-0 |

In Tables 2 to 5 above, ratio of formula (1) means the mass ratio (% by mass) of the structural unit represented by formula (1) in the polycarbonate resin contained in the resin composition.

As is clear from the results above, the resin compositions of this invention were found to demonstrate low loss tangent (Examples 1 to 20). Also, the pencil hardness was successfully made high.

In contrast, the compositions of Comparative Examples were found to demonstrate high loss tangent (Comparative Examples 1 to 5). Also, the pencil hardness was found low in a part of Comparative Examples.

## Claims

1. A resin composition for electronic/electric equipment component used with an electromagnetic wave at a frequency of 1 GHz or higher,
the resin composition comprising a polycarbonate resin, and the polycarbonate resin having a mass ratio of a structural unit represented by formula (1) and a carbonate unit other than the structural unit represented by formula (1) of (33 to 100):(67 to 0),

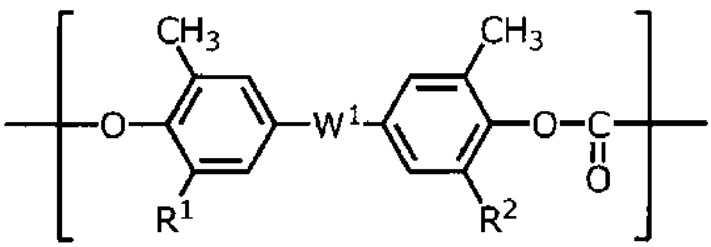

(1)

wherein each of $R^1$ and $R^2$ independently represents a hydrogen atom or a methyl group, and $W^1$ represents a single bond or a divalent group.

2. The resin composition of claim 1, further comprising 10 parts by mass or more and 100 parts by mass or less of an inorganic filler, per 100 parts by mass of the polycarbonate resin.

3. The resin composition of claim 2, wherein a mass ratio of the structural unit represented by formula (1) in the polycarbonate resin, per 100 parts by mass of the inorganic filler, is 150 parts by mass or larger.

4. The resin composition of claim 2 or 3, wherein the inorganic filler contains at least one selected from the group consisting of glass fiber, talc, and boron nitride.

5. The resin composition of any one of claims 2 to 4, wherein the inorganic filler contains glass fiber.

6. The resin composition of any one of claims 1 to 5, wherein the carbonate unit other than the structural unit represented by formula (1) contains a structural unit represented by formula (5),

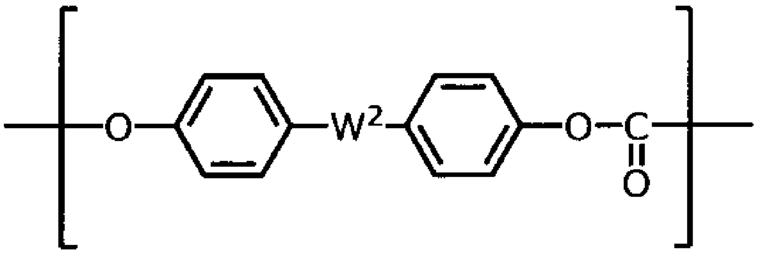

(5)

wherein $W^2$ represents a single bond or a divalent group.

7. The resin composition of claim 6, comprising:

a polycarbonate resin (A1) in which the structural unit represented by formula (1) accounts for 90% by mass or more of all structural units; and
a polycarbonate resin (A2) in which the structural unit represented by formula (5) accounts for 90% by mass or more of all structural unit,
and,
the polycarbonate resin (A1) accounts for 45% by mass or more of the polycarbonate resin contained in the resin composition.

8. The resin composition of claim 7,
wherein the polycarbonate resin (A1) has a viscosity-average molecular weight of 16,000 or larger and 30,000 or smaller, and the polycarbonate resin (A2) has a viscosity-average molecular weight of 16,000 or larger and 35,000 or smaller.

9. The resin composition of claim 6, wherein the polycarbonate resin contains a polycarbonate resin (A3) in which the structural unit represented by formula (1) accounts for 30 to 70% by mass of all structural units, and the structural unit represented by formula (5) accounts for 70 to 30% by mass of all structural units, and,
the polycarbonate resin (A3) accounts for 50% by mass or more of the polycarbonate resin contained in the resin composition.

10. The resin composition of any one of claims 1 to 9, wherein a pencil hardness is "H" or larger, when formed into a flat plate and measured in compliance with JIS K5600.

11. The resin composition of any one of claims 1 to 10, wherein a loss tangent is 0.0053 or smaller, when formed into a flat plate and measured at a frequency of 2.45 GHz.

12. The resin composition of any one of claims 1 to 11, further comprising 0.001 parts by mass or more and 30 parts by mass or less of a flame retardant, per 100 parts by mass of the polycarbonate resin.

13. An electronic/electric equipment component formed of a resin composition described in any one of claims 1 to 12, used with an electromagnetic wave at a frequency of 1 GHz or higher.

14. The electronic/electric equipment component of claim 13, wherein at least a part of the electronic/electric equipment component allows an electromagnetic wave at a frequency of 1 GHz or higher to transmit therethrough.

**INTERNATIONAL SEARCH REPORT**

International application No.
PCT/JP2020/041157

A. CLASSIFICATION OF SUBJECT MATTER
C08G 64/04(2006.01)i; C08K7/14(2006.01)i; C081 69/00(2006.01)i; C08K 3/013(2018.01)i; C08K 3/34(2006.01)i; C08K 3/38(2006.01)i
FI: C08169/00; C08K3/013; C08K7/14; C08K3/34; C08K3/38; C08G64/04
According to International Patent Classification (IPC) or to both national classification and IPC

B. FIELDS SEARCHED
Minimum documentation searched (classification system followed by classification symbols)
C08C64/04; C08K7/14; C08L69/00; C08K3/013; C08K3/34; C08K3/38

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X<br>A | JP 2010-144182 A (MITSUBISHI ENGINEERING-PLASTICS CORPORATION) 01 July 2010 (2010-07-01) claims, paragraphs [0029], [0073]-[0080], [0104], examples | 1-3, 10-14<br>4-9 |
| X<br>A | JP 2015-108118 A (MITSUBISHI ENGINEERING-PLASTICS CORPORATION) 11 June 2015 (2015-06-11) claims, paragraphs [0022], [0023], [0114], [0118], examples | 1-5, 10-14<br>6-9 |
| A | US 3275601 A (FARBENFABRIKEN BAYER AKTIENGESELLSCHAFT) 27 September 1966 (1966-09-27) entire text | 1-14 |
| A | JP 2019-156924 A (TEIJIN LTD.) 19 September 2019 (2019-09-19) entire text | 1-14 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 December 2020 (18.12.2020) | 28 December 2020 (28.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/041157

C (Continuation). DOCUMENTS CONSIDERED TO BE RELEVANT

| Category* | Citation of document, with indication, where appropriate, of the relevant passages | Relevant to claim No. |
|---|---|---|
| P, X | WO 2019/212020 A1 (MITSUBISHI ENGINEERING-PLASTICS CORPORATION) 07 November 2019 (2019-11-07) claims, paragraph [0068], examples | 1-14 |

Form PCT/ISA/210 (continuation of second sheet) (January 2015)

**INTERNATIONAL SEARCH REPORT**
Information on patent family members

International application No.
PCT/JP2020/041157

| Patent Documents referred in the Report | Publication Date | Patent Family | Publication Date |
|---|---|---|---|
| JP 2010-144182 A | 01 Jul. 2010 | (Family: none) | |
| JP 2015-108118 A | 11 Jun. 2015 | (Family: none) | |
| US 3275601 A | 27 Sep. 1966 | (Family: none) | |
| JP 2019-156924 A | 19 Sep. 2019 | (Family: none) | |
| WO 2019/212020 A1 | 07 Nov. 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005075571 A
- JP 2019172712 A
- JP 2017110180 A
- JP 2019135290 A
- JP 351 A
- WO 2019078162 A
- JP 2016216534 A